# EUROPEAN PATENT APPLICATION

(11) **EP 3 031 603 A1**
(43) Date of publication of application: **15.06.2016**
(21) Application number: 15460061.3
(22) Date of filing: 31.08.2015
(51) Int. Cl.: B32B 5/00, B32B 5/02, B32B 5/22, B32B 5/24, B32B 7/00, B32B 7/02, B32B 7/04, B32B 7/12, B32B 9/00, B32B 9/04, B32B 13/00, B32B 13/02, B32B 13/04, B32B 13/14, B32B 19/00, B32B 19/04, B32B 23/00

(54) **FIRE RESISTANT STRUCTURAL PANEL WITH A MINERAL WOOL CORE**

(30) Priority: 08.12.2014 UA 2014013111
(71) Applicant: Svoboda Piotr Slebioda, 76-200 Slupsk (PL)
(72) Inventor: Slebioda, Piotr, 62-002 Suchy Las (PL)
(74) Representative: Luczak, Jerzy

(57) **Abstract**

Fire resistant structural panel with a mineral wool core relates to the construction industry, namely to the composite elements of building construction, and is intended for the manufacturing of fire resistant load bearing structures.

The fire resistant structural panel with mineral wool core, is composed of an outer upper and lower board, an adhesive material, an internal strut framework and a filler. Wherein the strut framework has a form of regular hexagon net (honeycomb). The external boards (1,2) and the internal strut framework (4) are made of cement-cellulose and as the filler is used a mineral wool. Wherein the strut framework (4) is composed of modular parts such as internal walls (7) and connectors (8) with slots (9).

## Description

The claimed invention relates to the construction industry, namely to the composite elements of building construction, and is intended for the manufacture of fire resistant load bearing structures. There are many different materials for the outer shell and inner core, different design and methods of connection panels.

For example, the known three-layer wall panel SU 727 786, consisting of outer layers made of asbestos board, adhesive materials, packages of mineral wool panels and edges in polyester foam. The disadvantage of this invention is a low load strength.

Also known patent US 2011/0047932 in which one is described a building panel consists of upper and lower outer board (preferably laminated), an adhesive material and a matrix of structural stiffeners. This construction achieves better results as to structural load bearing capacity than the previous panel however the absence of a filling material reduces final resistance characteristics.

The closest to the claimed invention is a honeycomb panel described in the patent RU 136 064, which consists of the outer upper and lower board, an adhesive material, a matrix of structural stiffeners shaped in a form of attached to one another regular hexagons (honeycomb) and a filler, for which are used dry bulk materials or polymerizing materials. The material used for the outer board is or a thin metal sheet (steel, aluminium, zinc aluminium alloy) or a foil, or a laminated fibreglass, or a laminated carbon fibre, an aramid or a cloth or a paper sheet.

All these materials have poor fire resistance properties and as inside stiffeners are formed monolithically, it is difficult to manufacture. As for an inner cells filler is used dry loose material, the inner cells do not participate in the load transmission, what reduces the load bearing properties of the panel. Polymerizing materials fill the inner structure completely, however materials proposed for that application, mentioned in the patent description, are fragile and easily damaged what leads to special requirements concerning the transport and handling.

As a base for this invention is a task to create a structural fire resistant panel by adapting its core strut framework, its outer board layers, its core filler, to higher fire resistance requirements, load bearing and to simplify its fabrication and transport.

The problem is solved in the present invention by a fire resistant structural panel with mineral wool core, consisting of an outer upper and lower board, an adhesive material, a core made of struts as a regular hexagon internal framework (honeycomb) integrated with a filler. The external layers and the struts are made of cement-cellulose boards, the filler is a high density mineral wool and the internal framework has a modular design based on internal walls and connectors.

The present invention, in an exemplary, but not exhaustive embodiment, is visualized in the drawings:

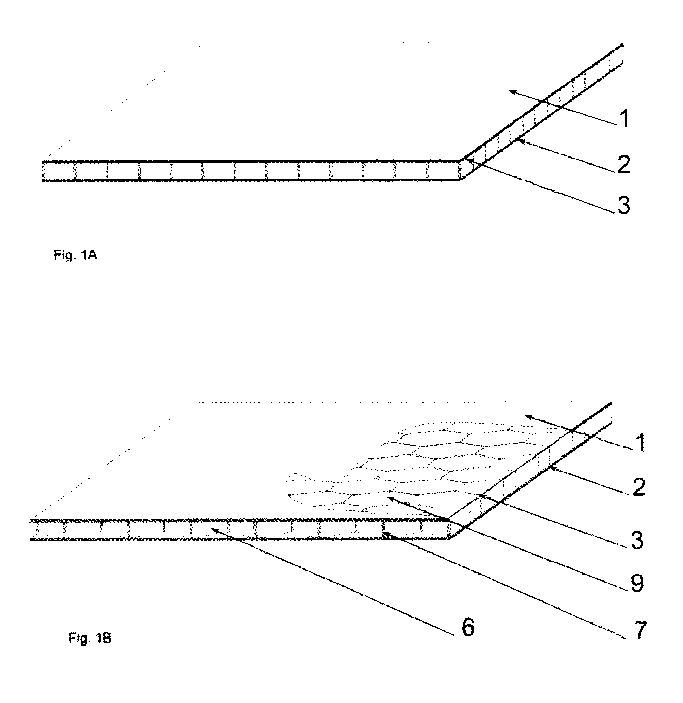

Figure 1 - a general view of the fire resistant structural panel with mineral wool core

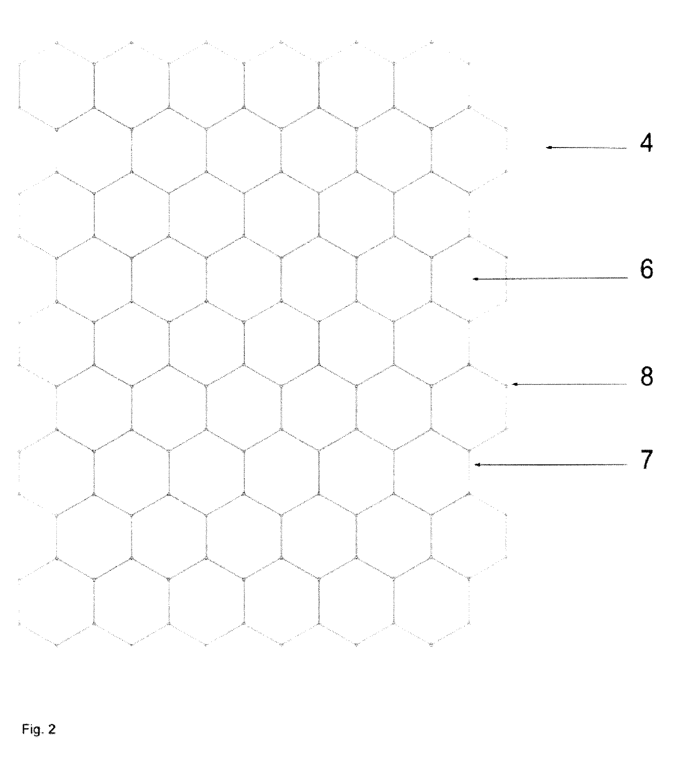

Figure 2 - a general view of the internal structure

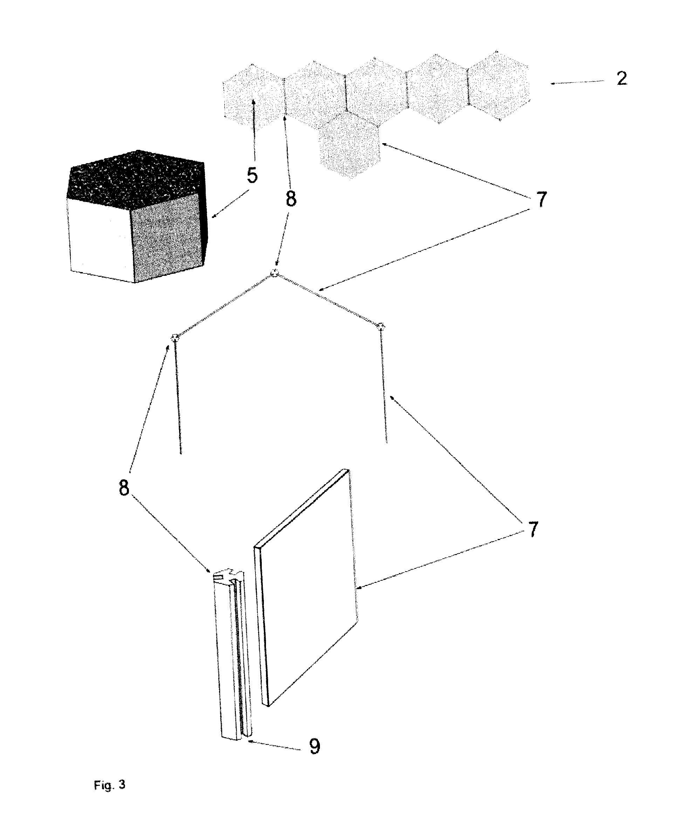

Figure 3 - a detailed view of internal walls and connectors

The fire resistant structural panel with mineral wool core, is composed of an outer upper 1 and lower 2 board, an adhesive material 3, an internal strut framework 4 and a filler 5. The strut framework 4 has a form of regular hexagon net (honeycomb). Wherein all strut framework is assembled of modular parts as internal wall 6 and connector 7 with slots 8. Each hexagon of the strut framework 4 is filled by the filler 9, in particular, by the mineral wool of high density.

Both layers of the outer boards as all compound of the strut framework are made of compressed cement-cellulose material, what is important for high fire resistance and mechanical properties of the panel. The mineral wool as a filler is a proved both fire resistance and thermal insulating compound. Wherein the inner core is made of modular compounds, it gives more options for the fabrication methods, even an assembly on-site is possible. The modularity of the core facilitates an accurate filling of the core with high density mineral wool what decides of increase of the final load bearing capacity of the panel.

## Claims

1. The fire resistant structural panel with mineral wool core, which is composed of an outer upper and lower boards, an adhesive material, an internal strut framework, made as a net of congruent regular hexagons and a filler, is **characterized in that** the external boards (1,2) and the internal strut framework (4) are made of cement-cellulose and as the filler (5) is used a mineral wool, wherein the strut framework (4) is composed of modular parts such as internal walls (7) and connectors (8) with slots (9).

## Amended claims

### Amended claims in accordance with Rule 137(2) EPC.

1. The fire resistant construction building panel with mineral wool core, which is composed of external boards : the upper and the lower, an adhesive material in a form of a glue, an internal reinforcing structure , made as a network of adjacent regular hexagons in a form similar to a honeycomb and a filler, **characterized in that** the external boards: the upper (1) and the lower(2) and the internal reinforcing structure (4) are made of a compressed cement-cellulose composite and the filler (5) is a mineral wool, wherein the reinforcing structure (4) is composed of modular parts (6) which walls (7) have connectors (8) with slots (9).
